(19) **Europäisches Patentamt**
**European Patent Office**
**Office européen des brevets**

(11) **EP 2 881 744 A1**

(12) **EUROPEAN PATENT APPLICATION**

(43) Date of publication:
**10.06.2015 Bulletin 2015/24**

(51) Int Cl.:
**G01P 3/44** (2006.01) **G01P 3/48** (2006.01)
**H02P 9/10** (2006.01) **H02P 21/13** (2006.01)
**H02P 23/12** (2006.01)

(21) Application number: **14178534.5**

(22) Date of filing: **25.07.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **03.12.2013 EP 13195518**

(71) Applicant: **ABB Technology AG**
**8050 Zürich (CH)**

(72) Inventors:
• **Larsson, Mats**
**5405 Baden-Dättwil (CH)**

• **Knazkins, Valerijs**
**5452 Oberrohrdorf (CH)**
• **Korba, Petr**
**5300 Turgi (CH)**
• **Baechle, Matthias**
**79805 Eggingen (DE)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(54) **Method and apparatus for determining a rotational speed of a synchronous machine**

(57)     A method for determining a rotational speed of a synchronous machine is provided. The synchronous machine is a generator and the method includes measuring one or more electrical parameters of the synchronous machine, and determining the rotational speed of the synchronous machine using an Extended Kalman Filter algorithm. The one or more electrical parameters are inputted into the Extended Kalman Filter algorithm as input parameters.

FIG. 1

FIG. 2

**Description**

**FIELD**

Embodiments of the present disclosure relate to a method for determining a rotational speed of a synchronous machine, to an apparatus for determining a rotational speed of a synchronous machine, and an excitation system.

**BACKGROUND**

Voltage regulation in electric power systems can be achieved by controlling an excitation current of a synchronous machine, such as a generator. The voltage regulators can be part of the excitation systems which also provide limiting and protective functions to the synchronous machine. Excitation systems are configured for tasks such as regulation of the terminal voltage, protection of the generator and itself, as well as contribution to the transient rotor angle and steady-state stability of the entire power system to which the generator is connected. In the power system engineering it is customary, and in many countries mandatory, to deploy power system stabilizers (PSS) to enhance the power system stability properties.

Conventional power system stabilizers rely upon two input signals, namely, the terminal active power and the rotor speed of the generator. The terminal active power can be directly access via measurements, whereas it can be challenging to directly measure the rotor speed in practice. An effectiveness of the PSS is dependent on a quality of the input signals and particularly the rotor speed signal. This consideration renders the speed estimation an important practical task for an excitation system.

Typically the rotor speed cannot be directly measured and thus, cannot readily be used in power system stabilizers. In some cases, conventional stabilizer concept can utilize pickup sensors to measure the shaft speed. However, the electromechanical design of these sensors has drawbacks, e.g., relatively low reliability, high noise levels, sensitivity to torsional oscillations, and costly project-specific customizations.

Other conventional PSSs synthesize the angular rotor speed by utilizing instantaneous values of the machine's stator voltages and currents. Sometimes the shaft speed is approximated by the frequency obtained from the stator voltage alone. It is noteworthy mentioning that thus obtained "shaft speed" signal should not be used as an input to the PSS. In brief, the main problem associated with the use of the generator frequency is related to the reduced observability of the electromechanical mode in that signal, which significantly reduced the effectiveness of the PSS.

The use of the shaft speed approximated by the stator voltage frequency has another adverse effect on some PSS designs, such as the IEEE Type PSS 2B. More specifically, the IEEE Type PSS 2B uses the "integral of accelerating power" as an approximation of the shaft speed. This signal is insensitive to turbine output power changes and it is in phase with the generator shaft speed, assuming the integral of accelerating power is properly calculated. As long as accurate measurements of the real power and the rotor speed are available, the integral of accelerating power can be calculated. It was found that the use of the stator voltage frequency instead of the rotor speed results in an erroneous calculation of the integral of acceleration power thus preventing the PSS from proper functioning.

Since the use of the stator voltage frequency as an input to the PSS 2B was not an viable option, the so-called "compensated frequency" was proposed as an alternative approximation of the shaft speed. The compensated frequency method relies on the calculation of the internal voltage ($E_i$), which is proportional to the total electromagnetic force (EMF) of the rotor and is approximately aligned with the $d$-axis of the rotor. The voltage $E_i$, is then used to measure the shaft speed.

When tuning a PSS, consideration must be given to at least two aspects, namely, damping of the local mode and inter-area mode(s). PSS can be used for enhancing the damping of such modes. Nevertheless, it has been observed that the use of compensated frequency as an input to the PSS can result in suboptimum performance of the PSS in damping of inter-area oscillations. Although it is possible in a simulation environment to obtain optimum damping over a practical frequency range (from the inter-area to the intra-plant mode), however, the damping predicted in the simulations will not necessarily be recorded on site, and the use of compensated frequency for the real-life PSS does not resolve this drawback.

In view of the above, a method for determining a rotational speed of a synchronous machine, an apparatus for determining a rotational speed of a synchronous machine, and an excitation system, that overcome at least some of the problems in the art, are needed.

It is an object of the present disclosure to provide a method for determining a rotational speed of a synchronous machine, an apparatus for determining a rotational speed of a synchronous machine, and an excitation system that provide an accurate, reliable, and fast estimation of the shaft speed.

**SUMMARY**

In light of the above, a method for determining a rotational speed of a synchronous machine, an apparatus for determining a rotational speed of a synchronous machine, and an excitation system are provided. Further aspects, advantages, and features of the present disclosure are apparent from the claims, the description, and the accompanying drawings.

According to an aspect of the present disclosure a method for determining a rotational speed of a synchronous machine is provided. The synchronous machine is a generator and the method includes measuring one or more electrical parameters of the synchronous machine, and determining the rotational speed of the synchronous machine using an Extended Kalman Filter algorithm. The one or more electrical parameters are inputted into the Extended Kalman Filter algorithm as input parameters.

According to another aspect of the present disclosure an apparatus for determining a rotational speed of a generator is provided. The apparatus includes at least one measuring device configured for measuring one or more electrical parameters of the synchronous machine; and a controller configured to determine the rotational speed of the synchronous machine using an Extended Kalman Filter algorithm, wherein the one or more electrical parameters are inputted into the Extended Kalman Filter algorithm as input parameters.

According to still another aspect of the present disclosure an excitation control system for a generator is provided. The excitation control system includes an apparatus for determining a rotational speed of the generator and a power system stabilizer configured to receive the rotational speed from the apparatus. The apparatus includes at least one measuring device configured for measuring one or more electrical parameters of the synchronous machine; and a controller configured to determine the rotational speed of the synchronous machine using an Extended Kalman Filter algorithm, wherein the one or more electrical parameters are inputted into the Extended Kalman Filter algorithm as input parameters.

Embodiments are also directed at apparatuses for carrying out the disclosed methods and include apparatus parts for performing each described method step. These method steps may be performed by way of hardware components, a computer programmed by appropriate software, by any combination of the two or in any other manner. Furthermore, embodiments according to the invention are also directed at methods by which the described apparatus operates. It includes method steps for carrying out every function of the apparatus.

## BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:

FIG. 1 shows a flow chart visualizing the Extended Kalman Filter according to embodiments described herein;

FIG. 2 shows a flow chart of a method for determining a rotational speed of a synchronous machine according to embodiments described herein;

FIG. 3 shows a graph illustrating phase voltages and current waveforms with a simulated grid fault at 5 seconds;

FIG. 4 shows a graph illustrating an estimated and true generator speed for the simulated grid fault at 5s;

FIG. 5 shows a graph illustrating an estimated and true load angle for the simulated grid fault at 5s;

FIG. 6 shows a graph illustrating an estimated and true subtransient EMF in the d-axis;

FIG. 7 shows a graph illustrating an estimated and true subtransient EMF in the q-axis;

FIG. 8 shows a graph illustrating an estimated and true transient EMF in the $d$-axis; and

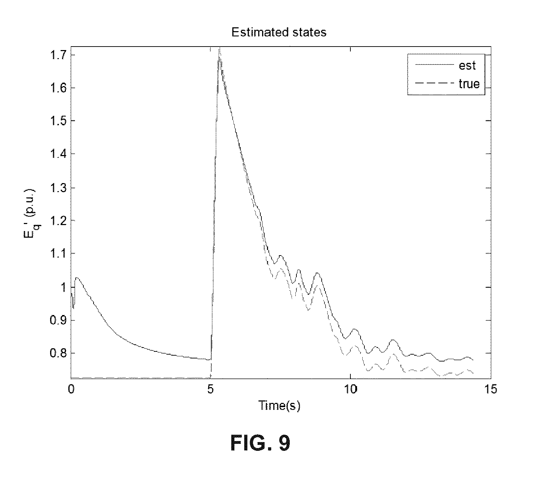

FIG. 9 shows a graph illustrating an estimated and true transient EMF in the $q$-axis.

## DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

Several methods for rotor speed estimation have been developed. The methods can be categorized into at least two groups, namely, (*i*) spectral methods and (ii) time-domain methods.

The spectral methods are typically based on modified Fast Fourier Transform methods to extract the fundamental frequency of a signal of interest. The signal can be either a raw measurement of a physical signal or it can be a signal that was derived from one or several measured signals. The fundamental frequency component of the signal is then assumed to represent the rotor speed. In the practical implementation of a spectral method care must be taken to make sure that the algorithm is capable of running in real time and at the same time provide accurate speed estimation. The issue of the measurement noise should also be addressed in the practical implementation of spectral methods for rotor speed estimation.

The time-domain methods are normally based on modified zero-crossing detection methods. Signals used in the zero-crossing can be either physical measurements or a synthesized signal made of one or several measurements. Then, the zero-crossing information is converted to the frequency estimate. The practical implementation of a zero-crossing method should address several issues which include but are not limited to harmonics and measurement noise.

Zero crossing detection followed by heuristics can be used to obtain the speed of a synchronous generator using electric signals. The embodiments described herein outperform the heuristical approaches and a tuning is straightforward and easy. The embodiments described herein particularly provide an accurate, reliable, and fast estimation of the rotational speed (also referred to as "rotor speed" or "shaft speed"). Further, an optimum performance of the PSS for example over a frequency range of interest can be achieved.

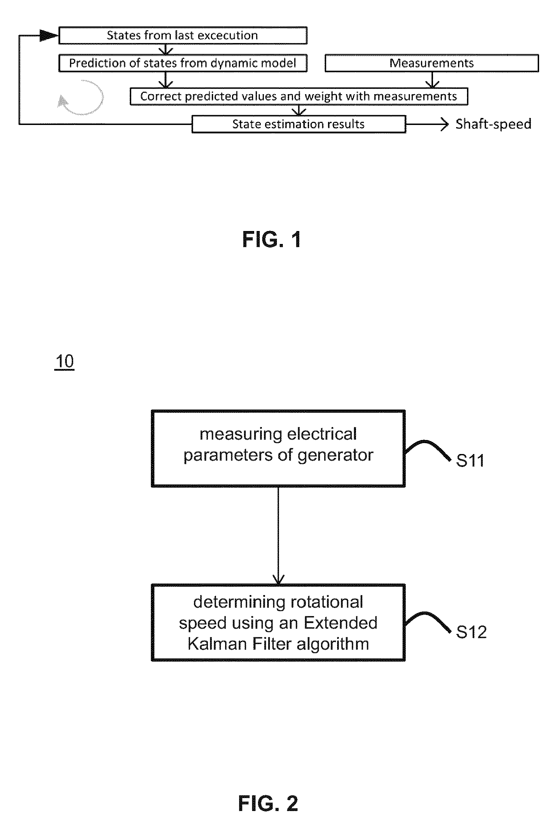

Figure 1 shows a flowchart visualizing the Extended Kalman Filter according to embodiments described herein.

A Kalman filter uses knowledge of a system under consideration in terms of mathematical equations, which define the dynamical behavior of the system. With the initial information from the last step and the dynamical behavior of the system, the Kalman filter predicts the result of the actual time step. The actual measurements will afterwards be compared with the prediction from the dynamic model of the system. The result or output of the state estimate for the rotational speed can then be used as input signal to the PSS, whereas all the states will be processed again in the following time step, as illustrated in figure 1.

Figure 2 shows a flow chart of a method 10 for determining a rotational speed of a synchronous machine according to embodiments described herein.

The method includes measuring one or more electrical parameters of the synchronous machine (block S11), and determining the rotational speed of the synchronous machine using an Extended Kalman Filter algorithm (block S12). The one or more electrical parameters are inputted into the Extended Kalman Filter algorithm as input parameters. The synchronous machine is a generator.

As used throughout this disclosure, the term "generator" refers to a dynamoelectric machine that has a magnetic field and an armature which delivers alternating current in synchronism with the motion of the machine and at a frequency equal to the product of the number of pairs of poles and the speed of the machine in revolutions per second (rotational speed).

In some implementations, the rotational speed corresponds to a frequency of 40 to 80 Hz, specifically 50 to 60 Hz, and more specifically about 50 Hz or about 60 Hz. As an example, the rotational speed corresponds to a power system nominal frequency +/- 20 %.

According to some embodiments, the one or more electrical parameters include at least one of a current at a terminal of the synchronous machine and a voltage at the terminal of the synchronous machine. The current and/or the voltage at the terminals of the synchronous machine can be measured by at least one measuring device such as a sensor. The current and/or the voltage at the terminals are easily accessible electrical parameters that can be measured with a high degree of accuracy and are thus beneficial input parameters for the Extended Kalman Filter algorithm.

In some implementations, the method further includes determining one or more machine parameters of the synchronous machine using the Extended Kalman Filter algorithm, wherein the one or more electrical parameters are inputted into the Extended Kalman Filter algorithm as input parameters, and wherein the one or more machine parameters of the synchronous machine include at least one of a reactance, such as an electrical reactance and/or a magnetic reactance, a mechanical inertia and a damping constant.

The machine parameters may be machine-specific and/or manufacturer-specific parameters. In some cases a manufacturer provides such machine-specific and/or manufacturer-specific parameters to the customer, such as at least one of an inertia constant, a damping constant, an armature resistance, a steady state reactance, a steady state inductance, a transient reactance, a transient inductance, a subtransient reactance and a subtransient inductance of the synchronous machine. However, the manufacturer's information may not be given at all, or may be not precise or could deviate from the real machine parameters. The present embodiments allow to accurately determine the machine parameters, e.g., for further use in operating the synchronous machine.

According to some embodiments, which can be combined with other embodiments described herein, the method for determining a rotational speed of a synchronous machine can include the following aspects:

- Estimation of the rotational speed of the synchronous generator.

- Estimation of the generator internal electromagnetic forces (EMFs) or equivalently the *dq*-fluxes.

- Estimation of a machine inertia constant (*H*).

- Estimation of a machine damping constant (D).

- Estimation of *d*-axis steady-state, transient and subtransient reactances *(xd, xd' and xd")*.

- Estimation of *q*-axis steady-state, transient and subtransient reactances (*xq, xq' and xq"*).

- Estimation of transient and subtransient time *d*-axis constants *(Td0' and Td0").*

- Estimation of transient and subtransient time *q*-axis constants *(Tq0' and Tq0")*.

- Using a model based approach based on the Extended Kalman Filter (EKF).

- Implementation on an excitation control unit.

The swing dynamics account for the balance of the rotational energy stored in the generator, turbine and shaft masses and can be described by the following set (1) of equations.

$$2H\frac{d\omega}{dt} = P_m - P_e - D(\omega - \omega_s)$$
$$\frac{d\delta}{dt} = \omega - \omega_s \qquad\qquad (1)$$

The values of the inertia constant *H* should be calculated based on the inertia of the generator and the damping coefficient *D* are normally available from the generator manufacturer. In case the value of *D* is not known, it can be set to zero. This model assumes that the shaft of the generator is stiff such that there are no torsional oscillations between the masses of the turbines and the generator itself. The mechanical power delivered to the shaft of the generator by the turbines is denoted $P_m$ and the electrical air gap power is denoted $P_e$.

Furthermore, the generator air gap power is coupled to the electrical measurements available at the terminals through the generator electrical system equation. Various models of the synchronous generator exist. In many countries it is also mandatory for large generators to have power system stabilizers activated, but in a preferred variant of the invention the so-called "6th order model" is employed. This model neglects the electromagnetic transients of the stator, but includes the transient and subtransient dynamics of the generator through the modelling of the stator windings as equivalent *d*-and *q*-windings and as well as damper windings in both the *d*- and *q*-axes. The dynamics of the field winding are bundled together with those of the *d*-axis stator winding. Thus, four differential equations are required to describe the dynamics. Further, magnetic saturation and hysteresis are neglected. Practical experience shows that this is the simplest model that can be used to model the interaction between the generator mechanical and electrical subsystems with satisfactory accuracy. In some implementations, a magnetic saturation and hysteresis effects can be included in the model used by the EKF.

The 6th order model can be written in the following form:

$$T_{d0''} \frac{dE_{q''}}{dt} = E_{q'} - E_{q''} + i_d(x_{d'} - x_{d''})$$

$$T_{q0''} \frac{dE_{d''}}{dt} = E_{d'} - E_{d''} + i_q(x_{q'} - x_{q''})$$

$$T_{d0'} \frac{dE_{q'}}{dt} = -E_{q'} + i_d(x_d - x_{d'}) + E_{fd}$$

$$T_{q0'} \frac{dE_{d'}}{dt} = -E_{q'} + i_d(x_d - x_{d'}) \qquad (2)$$

Coupling stator equations in *dq*-quantities are specified as follows:

$$v_d = E_{d''} - r_a i_d - x_{q''} i_q$$

$$v_q = E_{q''} - r_a i_q + x_{d''} i_d \qquad (3)$$

The air gap power is given by:

$$P_e = E_{d''} i_d + E_{q''} i_q + (x_{d''} - x_{q''}) i_d i_q \qquad (4)$$

This model is similar to those used in some simulation programs for power system dynamic stability studies, e.g. PowerFactory and PSS/E, and is appropriate, for example, for studies of excitation systems and power system stabilizer tuning. More detailed models, including electromagnetic transients and similar to those used, for example by PSCAD and SimPowerSystems, can also be employed.

The generator electrical equations are formulated in the form of an equivalent *dq0*-system and the terminal quantities need to be transferred to the stator phase *abc*-reference frame. The terminal quantities can be expressed as follows:

$$v_{0dq} = [v_0, v_d, v_q]^T, i_{0dq} = [i_0, i_d, i_q]^T$$

The orthogonal modified Park transform can be used, which is given by

$$W(\theta) := \sqrt{\frac{2}{3}} \begin{bmatrix} 1/\sqrt{(2)} & 1/\sqrt{(2)} & 1/\sqrt{(2)} \\ \cos(\theta) & \cos(\theta - \frac{2\pi}{3}) & \cos(\theta + \frac{2\pi}{3}) \\ \sin(\theta) & \sin(\theta - \frac{2\pi}{3}) & \sin(\theta + \frac{2\pi}{3}) \end{bmatrix} \qquad (5)$$

The electrical angle between the *d*-axis of the three-phase system and the *d*-axis of the generator reference frame is given by:

$$\theta = \omega_s t + \delta$$

The Extended Kalman Filter (EKF) is a generalization of the standard Kalman filter for linear systems, into the domain of nonlinear systems. The state transition and observation models need not be linear functions of the state but may instead be general (differentiable) functions. The discrete-time general form can be used, which is given by:

$$\mathbf{x}_k = \mathbf{f}(\mathbf{x}_{k-1}, \mathbf{u}_{k-1}) + \mathbf{q}_{k-1}$$
$$\mathbf{y}_k = \mathbf{h}(\mathbf{x}_k) + \mathbf{r}_k \qquad (6)$$

The function **f** is used to compute the predicted state from the previous estimate and the function **h** is used to compute predicted measurements assuming that the system has the current state $\mathbf{x_k}$. The process noise is modelled as Gaussian noise that excites the system ($\mathbf{q_k}$), and the measurement noise that likewise is assumed to be Gaussian is modelled by the noise sequence $\mathbf{r_k}$. The corresponding noise covariance matrices are denoted $\mathbf{Q_k}$ and $\mathbf{R_k}$, respectively.

Combining the above equations (1) to (5) and setting the state and measurement vectors as shown below, the synchronous generator together with the available measurements can be expressed in the desired form (6) and the Extended Kalman Filter can be applied to update equations. The state and measurement vectors can be set to:

$$\mathbf{x_k} = (\theta, \omega, E_{d''}, E_{q''}, E_{d'}, E_{q'}, i_d, i_q, P_m)$$

$$\mathbf{y_k} = (v_a, v_b, v_c, i_a, i_b, i_c)$$

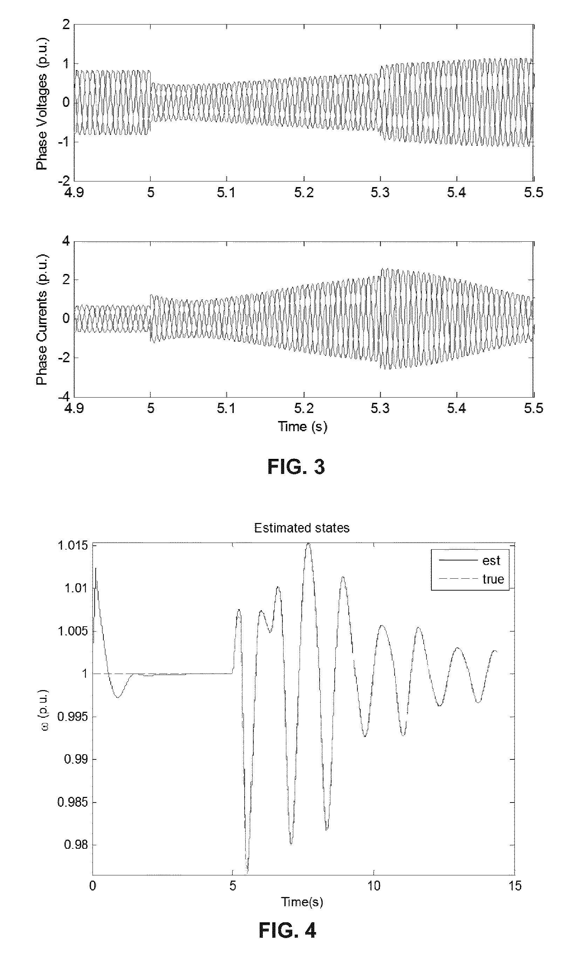

Figure 3 shows the phase voltage and case waveforms resulting from a simulated grid fault initiated at time t = 5 seconds and Figure 4 shows the true rotor speed as well as the estimate provided by the Extended Kalman Filter. The filter has been initialized with typical values and there is therefore an initial transient of around two seconds caused by the "cold start" of the EKF. Following this initial transient and during the transient induced by the fault at 5s, a near perfect tracking of the true frequency can be observed. Compared to conventional measurements and other estimation techniques discussed previously, the method according to the embodiments described herein gives an estimation error about an order of magnitude smaller. If a measurement of the mechanical shaft power $P_m$ is available this can be omitted from the state vector. Provided that this measurement is accurate, it will further improve the accuracy of the speed estimation.

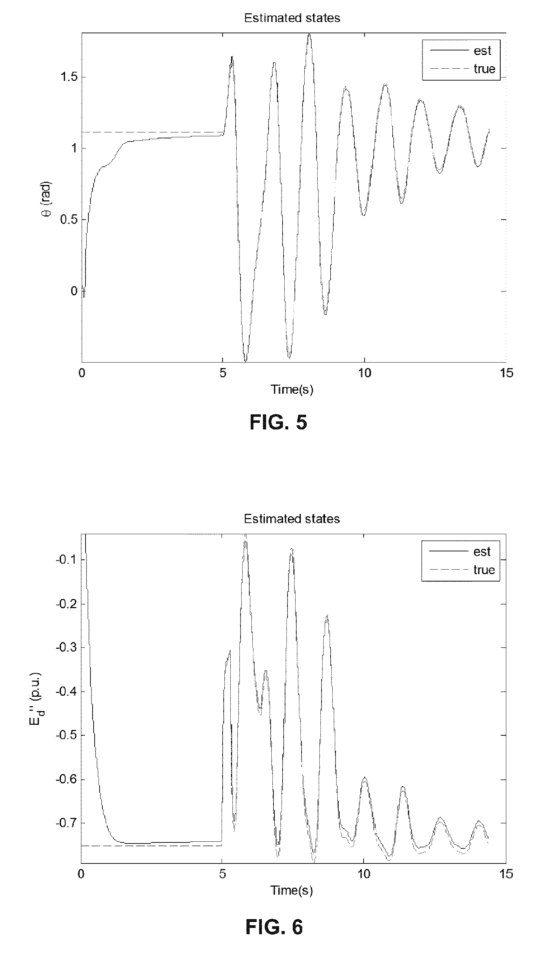

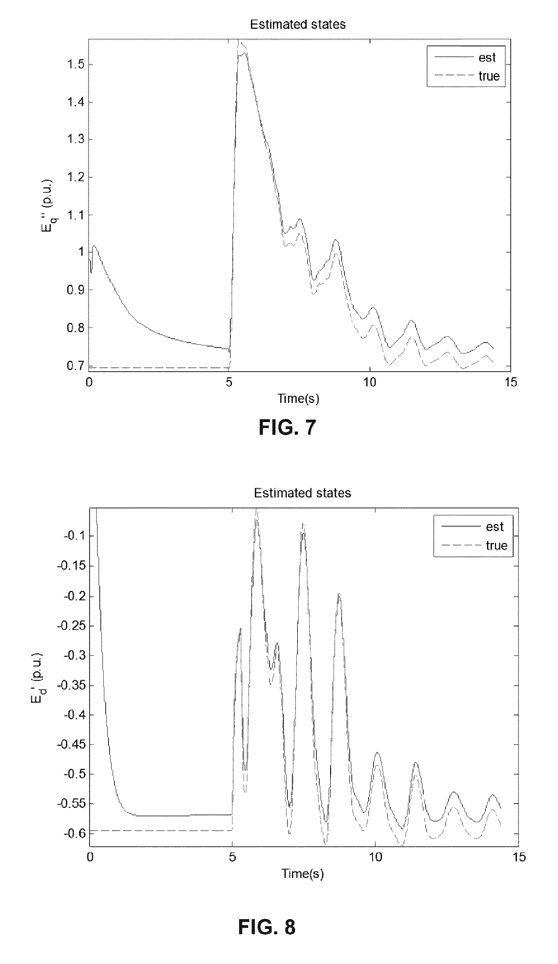

Figures 5 to 7 show the estimation of the synchronous generator load angle and (sub-)transients EMFs. As shown, these quantities can as well be estimated with high accuracy.

According to another aspect of the present disclosure an apparatus for determining a rotational speed of a generator is provided. The apparatus includes at least one measuring device configured for measuring one or more electrical parameters of the synchronous machine; and a controller configured to determine the rotational speed of the synchronous machine using an Extended Kalman Filter algorithm, wherein the one or more electrical parameters are inputted into the Extended Kalman Filter algorithm as input parameters.

According to some embodiments, the apparatus is configured to implement the method as described above. For carrying out the described method steps, the apparatus can include hardware components, a computer programmed by appropriate software, or any combination of these two.

According to still another aspect of the present disclosure an excitation control system for a generator is provided. The excitation control system includes an apparatus for determining a rotational speed of the generator and a power system stabilizer configured to receive the rotational speed from the apparatus. The apparatus can be configured as the apparatus described above.

In some implementations, the power system stabilizer is configured to generate a modulation signal acting on the excitation control system output for damping electromechanical oscillations.

The embodiments of the present disclosure provide an accurate measurement of the rotational speed, e.g., the rotor angular speed, of the synchronous machine. The embodiments use the Extended Kalman Filter for the fast and accurate estimation of the rotational speed. A use of the rotor speed is in power system stabilizers. Conventional methods (e.g., compensated frequency) of rotor-speed estimation have drawbacks. As an example, the compensated frequency may cause the PSS to operate suboptimally and may even produce negative damping for inter-area modes. In contrast, the present disclosure provides an EKF-based speed estimate that enables providing excellent damping for all frequencies of practical interest.

While the foregoing is directed to embodiments of the disclosure, other and further embodiments of the disclosure may be devised without departing from the basic scope thereof, and the scope thereof is determined by the claims that follow.

## Claims

1. A method for determining a rotational speed of a synchronous machine, wherein the synchronous machine is a generator, the method comprising:

   measuring one or more electrical parameters of the synchronous machine, and
   determining the rotational speed of the synchronous machine using an Extended Kalman Filter algorithm, wherein the one or more electrical parameters are inputted into the Extended Kalman Filter algorithm as input parameters.

2. The method of claim 1, wherein the one or more electrical parameters include at least one of a current at a terminal of the synchronous machine and a voltage at the terminal of the synchronous machine.

3. The method of claim 1 or 2, further including:

   determining one or more machine parameters of the synchronous machine using the Extended Kalman Filter algorithm, wherein the one or more electrical parameters are inputted into the Extended Kalman Filter algorithm as input parameters,
   wherein the one or more machine parameters of the synchronous machine include at least one of an inertia constant, a damping constant, an armature resistance, a steady state reactance, a steady state inductance, a transient reactance, a transient inductance, a subtransient reactance and a subtransient inductance.

4. The method of one of claims 1 to 3, wherein the rotational speed corresponds to a frequency of 40 to 80 Hz, specifically 50 to 60 Hz, and more specifically about 50 Hz or about 60 Hz.

5. An apparatus for determining a rotational speed of a generator, comprising:

   at least one measuring device configured for measuring one or more electrical parameters of the synchronous machine; and
   a controller configured to determine the rotational speed of the synchronous machine using an Extended Kalman Filter algorithm, wherein the one or more electrical parameters are inputted into the Extended Kalman Filter algorithm as input parameters.

6. The apparatus of claim 5, wherein the apparatus is configured to implement the method of one of claims 1 to 4.

7. An excitation control system for a generator, comprising:

   an apparatus of one of claims 5 and 6;
   a power system stabilizer configured to receive the rotational speed from the apparatus.

8. The excitation control system of claim 7, wherein the power system stabilizer is configured to generate a modulation signal acting on the excitation control system output for damping electromechanical oscillations.

| | | |
|---|---|---|
| States from last excecution | | |
| Prediction of states from dynamic model | | Measurements |
| Correct predicted values and weight with measurements | | |
| | State estimation results | → Shaft-speed |

## FIG. 1

10

measuring electrical
parameters of generator     S11

determining rotational
speed using an Extended
Kalman Filter algorithm     S12

## FIG. 2

FIG. 3

FIG. 4

Estimated states

**FIG. 5**

Estimated states

**FIG. 6**

Estimated states

**FIG. 7**

Estimated states

**FIG. 8**

Estimated states

FIG. 9

# EP 2 881 744 A1

Europäisches
Patentamt

European
Patent Office

Office européen
des brevets

## EUROPEAN SEARCH REPORT

Application Number

EP 14 17 8534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GHAHREMANI E ET AL: "Simultaneous state and input estimation of a synchronous machine using the Extended Kalman Filter with unknown inputs", ELECTRIC MACHINES&DRIVES CONFERENCE (IEMDC), 2011 IEEE INTERNATIONAL, IEEE, 15 May 2011 (2011-05-15), pages 1468-1473, XP032038649, DOI: 10.1109/IEMDC.2011.5994825 ISBN: 978-1-4577-0060-6 | 1-6 | INV. G01P3/44 G01P3/48 H02P9/10 H02P21/13 H02P23/12 |
| Y | * page 1468 - page 1469 * * page 1471, right-hand column - page 1473, left-hand column * ----- | 1-8 | |
| X | ESMAEIL GHAHREMANI ET AL: "Online State Estimation of a Synchronous Generator Using Unscented Kalman Filter From Phasor Measurements Units", IEEE TRANSACTIONS ON ENERGY CONVERSION, IEEE SERVICE CENTER, PISCATAWAY, NJ, US, vol. 26, no. 4, 1 December 2011 (2011-12-01), pages 1099-1108, XP011369834, ISSN: 0885-8969, DOI: 10.1109/TEC.2011.2168225 | 1,5 | |
| | | | TECHNICAL FIELDS SEARCHED (IPC) G01P H02P |
| Y | * page 1099 - page 1101, left-hand column * * page 1105, right-hand column - page 1107, left-hand column * ----- -/-- | 1-8 | |

The present search report has been drawn up for all claims

| Place of search | Date of completion of the search | Examiner |
|---|---|---|
| Munich | 23 January 2015 | Felicetti, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

Europäisches
Patentamt

European
Patent Office

Office européen
des brevets

# EUROPEAN SEARCH REPORT

Application Number

EP 14 17 8534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TEBIANIAN HAMED ET AL: "Dynamic state estimation in power systems using Kalman filters", 2013 IEEE ELECTRICAL POWER & ENERGY CONFERENCE, IEEE, 21 August 2013 (2013-08-21), pages 1-5, XP032592914, DOI: 10.1109/EPEC.2013.6802979 [retrieved on 2014-04-18] | 1,5 | |
| Y | * page 1 - page 2, left-hand column; figures 2,3 * <br> * page 4 * | 1-8 | |
| Y | VENKATASUBRAMANIAN V ET AL: "Direct computation of generator internal dynamic states from terminal measurements", SYSTEM SCIENCES, 2004. PROCEEDINGS OF THE 37TH ANNUAL HAWAII INTERNATI ONAL CONFERENCE ON 5-8 JAN. 2004, PISCATAWAY, NJ, USA,IEEE, 5 January 2004 (2004-01-05), pages 60-65, XP010683128, DOI: 10.1109/HICSS.2004.1265193 ISBN: 978-0-7695-2056-8 * page 1 - page 2 * * page 6 * | 1-8 | TECHNICAL FIELDS SEARCHED (IPC) |
| X | US 2005/007044 A1 (QIU MING [CA] ET AL) 13 January 2005 (2005-01-13) | 1,2,5,6 | |
| Y | * paragraphs [0002] - [0006], [0016], [0017], [0020], [0042] - [0044], [0048], [0049], [0068] - [0071] * | 1-8 | |

The present search report has been drawn up for all claims

| Place of search | Date of completion of the search | Examiner |
|---|---|---|
| Munich | 23 January 2015 | Felicetti, Christoph |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 17 8534

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2015

| Patent document cited in search report | Publication date | Patent family member(s) | Publication date |
|---|---|---|---|
| US 2005007044 A1 | 13-01-2005 | EP 1645032 A1<br>JP 2007531478 A<br>US 2005007044 A1<br>WO 2005008890 A1 | 12-04-2006<br>01-11-2007<br>13-01-2005<br>27-01-2005 |

EPO FORM P0459

For more details about this annex : see Official Journal of the European Patent Office, No. 12/82